# EUROPEAN PATENT SPECIFICATION

(11) **EP 3 025 693 B1**
(45) Date of publication and mention of the grant of the patent: **04.07.2018**
(21) Application number: 13889822.6
(22) Date of filing: 26.07.2013
(51) Int. Cl.: B25J 9/16, A61H 3/00, A61H 3/04, A61G 7/10, B25J 11/00

(54) **ASSISTANCE ROBOT**
HILFSROBOTER
ROBOT D'ASSISTANCE

(43) Date of publication of application: 01.06.2016
(73) Proprietor: Fuji Machine Mfg. Co., Ltd., Chiryu-shi, Aichi 472-8686 (JP)
(72) Inventor: ISOZUMI, Joji, Chiryu-shi Aichi 472-8686 (JP); NAKANE, Nobuyuki, Chiryu-shi Aichi 472-8686 (JP); NOMURA, Hideaki, Chiryu-shi Aichi 472-8686 (JP)
(74) Representative: Grünecker Patent- und Rechtsanwälte PartG mbB
(86) International application number: PCT/JP2013/070388
(87) International publication number: WO 2015/011837

(56) References cited:
- JP-A- 2009 142 517
- JP-A- 2010 142 334
- JP-A- 2010 142 562
- JP-A- 2010 253 048
- CHUGO D ET AL: "The wheel control of a robotic walker for standing and walking assistance with stability", ROBOT AND HUMAN INTERACTIVE COMMUNICATION, 2008. RO-MAN 2008. THE 17TH IEEE INTERNATIONAL SYMPOSIUM ON, IEEE, PISCATAWAY, NJ, USA, 1 August 2008 (2008-08-01), pages 297-302, XP031307553, ISBN: 978-1-4244-2212-8

## Description

### Technical Field

The present invention relates to a care robot that assists a care receiver to stand up and sit down.

### Background Art

As a type of care robot, a care robot disclosed in patent literature 1 is known. As shown in figs. 3A and 3B of patent literature 1, the care robot can assist a user (care receiver) to transition between a non-standing position (sitting position) and a standing position. The paper "The wheel control of a robotic walker for standing and walking assistance with stability" by D. Chugo et al, Proc, IEEE RO- MAN 2008, pp 297-302, diclsoses a similar care robot.

### Citation List

### Patent Literature

Patent Literature 1: JP-A-2012-030077

### Summary of Invention

### Technical Problem

The care robot disclosed in the above patent literature 1 can assist a user (care receiver) to transition between a non-standing position and a standing position. However, there is a problem in that the standing state of the care receiver who transitioned from a sitting position to a standing position is a posture tilted backward if the position on the floor of the feet of the sitting care receiver is further forward than the position directly below the knees of the care receiver, and conversely, and is a posture tilted forward if the position on the floor of the feet of the sitting care receiver is further backward than the position directly below the knee of the care receiver.

In order to solve the above problem, an object of the present invention is to provide a care robot that stands a care receiver up in a posture without discomfort even when a foot position of the sitting care receiver varies. Solution to Problem

To solve the above problem, the present invention of a care robot comprises: a base; a robot arm section that is provided on the base and includes multiple arms that are relatively movable to each other by using a drive section; a holding section that is provided on a portion of the robot arm section and that assists a care receiver to stand up or sit down by supporting a body part of the care receiver; a storage section that stores standing up trajectory reference data which indicates the standing up trajectory along which a movement control portion of the care receiver passes when the care receiver sitting on a seat stands up being supported by the holding section; a correction section that corrects the standing up trajectory reference data based on a foot position of the care receiver when sitting on the seat; and a drive control section that drives the drive section so as to drive the robot arm section based on the standing up trajectory reference data corrected by the correction section.

### Brief Description of Drawings

[Fig. 1] Fig. 1 is a right side view showing an embodiment of a care robot according to the present invention.
[Fig. 2] Fig. 2 is a plan side view showing an embodiment of a care robot according to the present invention.
[Fig. 3a] Fig. 3a is a right side view showing a scheme of the internal structure of the care robot shown in fig. 1 which is in an extended state.
[Fig. 3b] Fig. 3b is a front view showing the vicinity including a first slide section shown in fig. 3a.
[Fig. 4a] Fig. 4a is a right side view showing a scheme of the internal structure of the care robot shown in fig. 1 which is in a contracted state.
[Fig. 4b] Fig. 4b is an end surface view taken along line 4b-4b shown in Fig. 4a.
[Fig. 4c] Fig. 4c is a front view showing the vicinity including a first slide section shown in fig. 4a.
[Fig. 5] Fig. 5 is a side view showing a state in which the care robot is close to a standing care receiver.
[Fig. 6] Fig. 6 is a side view showing a state in which the care robot is supporting a sitting care receiver.
[Fig. 7] Fig. 7 is a side view showing a state in which the care robot is supporting a standing care receiver.
[Fig. 8] Fig. 8 shows a standing up motion on the left, and a sitting down motion on the right.
[Fig. 9] Fig. 9 is a table showing relationships between XY coordinates and robot coordinates.
[Fig. 10] Fig. 10 is a schematic side view showing lengths and angles of the robot arm section.
[Fig. 11] Fig. 11 shows a reference standing up trajectory based on standing up trajectory reference data, a near-side-use standing up trajectory based on near-side-use standing up trajectory data, and far-side-use standing up trajectory based on far-side-use standing up trajectory data.
[Fig. 12] Fig. 12 shows a reference standing up trajectory based on standing up trajectory reference data on the left, a near-side-use standing up trajectory based on near-side-use standing up trajectory data in the middle, and a far-side-use standing up trajectory based on far-side-use standing up trajectory data on the right.
[Fig. 13] Fig. 13 is a block diagram showing the care robot shown in fig. 1.
[Fig. 14] Fig. 14 is a block diagram showing the control device shown in fig. 13. Description of Embodiment

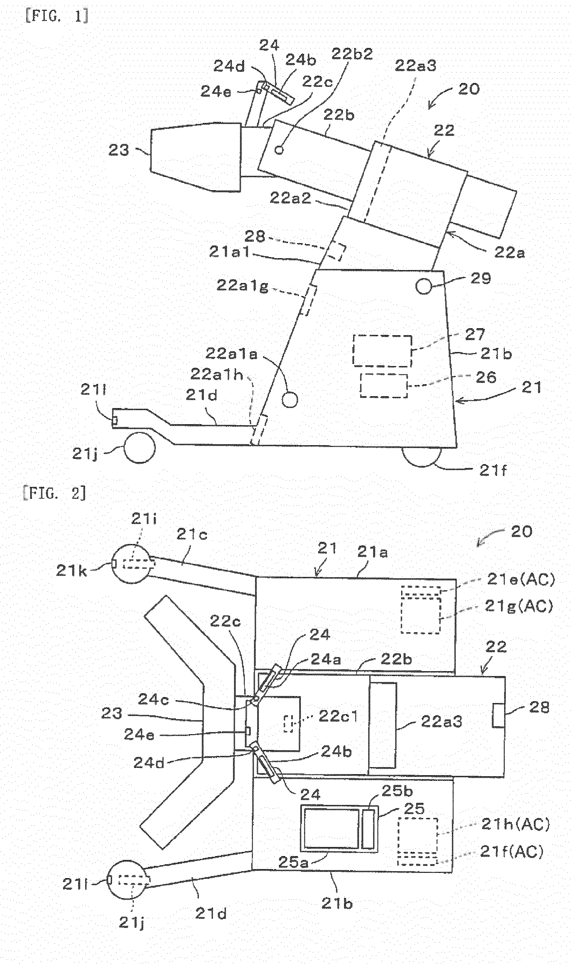

Hereinafter, an embodiment of a care robot according to the present invention will be described. Fig. 1 and fig. 2 are respectively a right side view and plan view showing care robot 20.

Care robot 20 is a care robot for assisting the standing up and sitting down of a care receiver M1 by supporting a body part (for example, the upper body, particularly, the chest) of care receiver M1. As shown in figs. 1 and 2, care robot 20 includes base 21, robot arm section 22, holding section 23, handle 24, operation device 25, storage device 26 (storage section), and control device 27.

Base 21 is provided with left/right base sections 21a and 21b, and left/right leg sections 21c and 21d. Left/right base sections 21a and 21b are provided spaced apart by a specified interval in the left/right direction, and as shown in fig. 2, left/right drive wheels 21e and 21f are respectively provided on left/right base sections 21a and 21b, and left/right drive wheel motors 21g and 21h that respectively drive left/right drive wheels 21e and 21f are internally incorporated in left/right base sections 21a and 21b. Care robot 20 travels using left/right drive wheels 21e and 21f which are respectively driven by left/right drive wheel motors 21g and 21h.

Traveling drive section AC is configured from left/right drive wheels 21e and 21f, and left/right drive wheel motors 21g and 21h. The configuration may be such that the above drive sources provided in base 21 are omitted and care robot 20 is moved by being pushed by care receiver M1.

Left/right leg sections 21c and 21d extend horizontally in a forward direction (left direction in figs. 1 and 2) from left/right base sections 21a and 21b. Left/right driven wheels 21i and 21j are respectively provided on an end section of left/right leg sections 21c and 21d. In addition, a pair of collision prevention sensors 21k and 21l are respectively provided on an end of the left/right leg sections 21c and 21d. Collision prevention sensors 21k and 21l are sensors for detecting an obstacle, and a detection signal thereof is transmitted to control device 27.

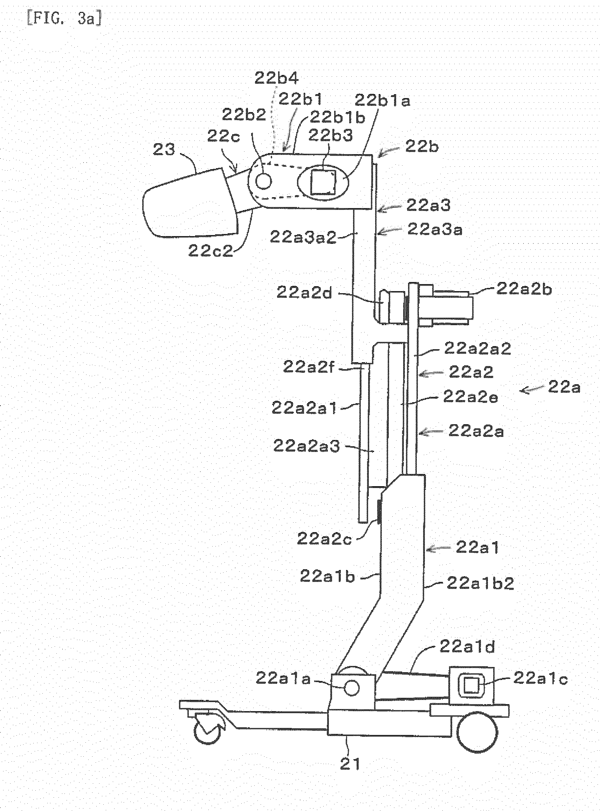

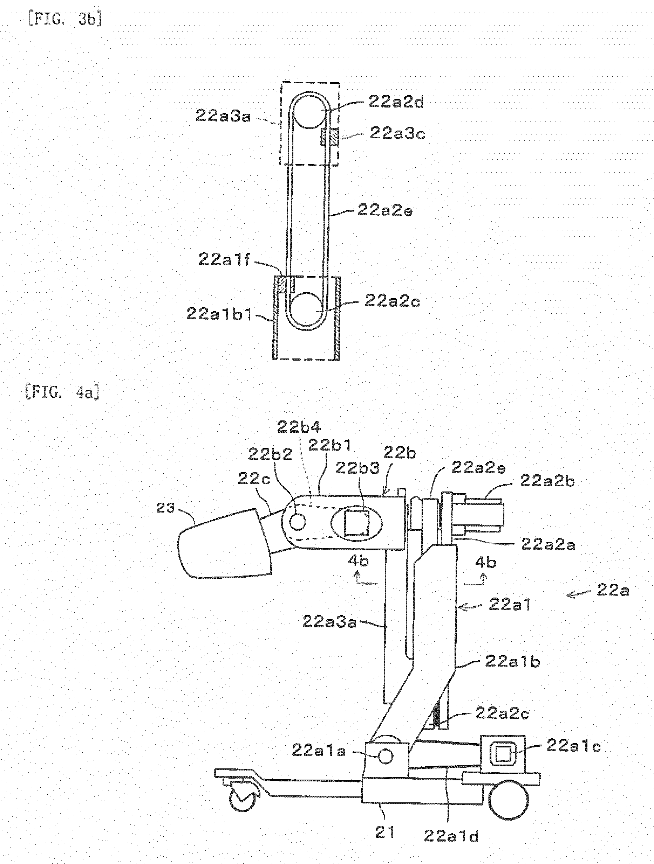

A base section of robot arm section 22 is attached to the base 21 and, as shown in figs. 3a and 4a, robot arm section 22 is provided with multiple arms 22a, 22b, and 22c which are relatively movable by using a drive section configured to mainly include first and second rotation motors 22a1c and 22b3 and a slide motor 22a2b. Robot arm section 22 may be configured from multiple axes. Axes in this case may include at least one of a rotation axis and a slide axis.

As shown in figs. 3a and 3b, and figs. 4a to 4c, a base section of first arm 22a is attached to base 21. First arm 22a is provided with slide base section 22a1, first slide section 22a2, and second slide section 22a3.

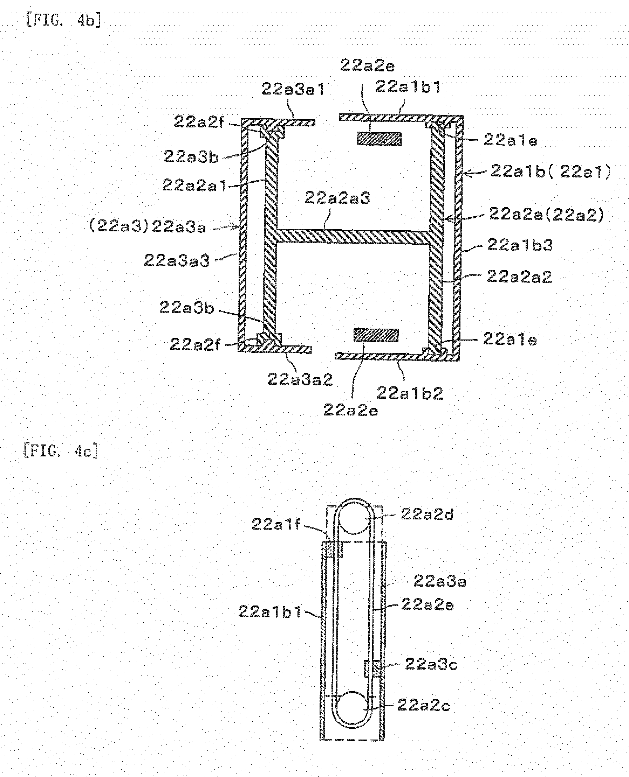

As shown in figs. 1 and 2, slide base section 22a1 is formed in a substantially rectangular cuboid shape. As shown in fig. 3a, the base end section of slide base section 22a1 is provided mainly with frame 22a1b which is attached to base 21 so as to be rotatable around first rotation axis 22ala. Frame 22a1b is formed with a substantially U-shaped cross section, and as shown in fig. 4b, is configured mainly from left/right plate members 22a1b1 and 22a1b2 which are formed bent, and a rear plate member 22a1b3 whose left and right ends are connected to the upper rear ends of the left/right plate members 22a1b1 and 22alb2.

As shown in fig. 3a, first rotation motor 22a1c is provided on base 21. First drive belt 22a1d is mounted around a pulley of first rotation motor 22a1c and a pulley of first rotation axis 22ala. When first rotation motor 22a1c is driven, frame 22a1b, that is slide base section 22a1, is rotated around first rotation axis 22a1a in a forward direction or backward direction.

As shown in fig. 4b, a left/right guide groove 22a1e that slidably engages with the left/right end of rear plate member 22a2a2 of frame 22a2a of first slide section 22a2 which is described below is formed on the inside of frame 22a1b (on the inside of left/right plate member 22a1b1 and 22a1b2). Fixed section 22alf that is attached to and fixes slide belt 22a2e which is described below is provided on an upper section of left plate member 22a1b1 of frame 22a1b (refer to figs. 3b and 4c).

Slide base section 22a1 is provided with knee sensor 22a1g and foot sensor 22a1h. Knee sensor 22a1g is provided facing forwards from the front of slide base section 22a1 (the left direction is the front direction in figs. 1 and 2), and is provided at a position roughly equal to the knee height of care receiver M1 sitting on the seat. Knee sensor 22a1g is a distance detecting sensor that detects the distance to a knee of care receiver M1. A detection signal of knee sensor 22a1g is sent to control device 27. The knee of care receiver M1 sitting on the seat is the reference portion of care receiver M1, and knee sensor 22a1g is the first distance detecting sensor that detects the distance to the reference portion of care receiver M1.

Foot sensor 22a1h is provided facing forwards from the front of slide base section 22a1, and is provided at a position roughly equal to the ankle height of care receiver M1 sitting on the seat. Foot sensor 22a1h is a distance detecting sensor that detects the distance to a foot of care receiver M1. A distance to a foot may be a distance to the tip of a toe or a distance to an ankle. A detection signal of foot sensor 22a1h is sent to control device 27. Foot sensor 22a1h is the second distance detecting sensor that detects the distance to a foot of care receiver M1. Note that the above distance detecting sensors 22a1g and 22a1h are, for example, laser type, LED type, or ultrasonic type sensors.

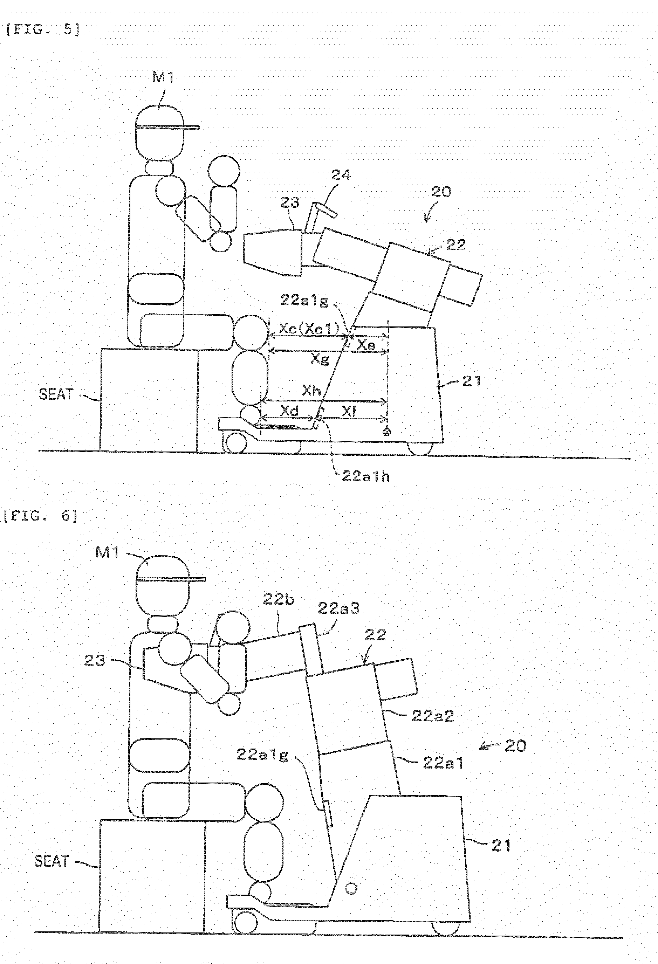

As shown in fig. 5, care robot 20 uses a detection result (distance between care robot 20 and a knee of care receiver M1) of knee sensor 22a1g, and moves to a specified position where the distance from sitting care receiver M1 becomes specified distance Xc1. The specified position is the optimum position for standing up care receiver M1 (standing up optimum position). Note that, the total of the distance (measurement distance) Xc from knee sensor 22a1g to the knee, and distance Xe which is the X-axis coordinate portion from knee sensor 22a1g to a reference point of care robot 20, is the position of the knee of care receiver M1 with respect to the reference point of care robot 20. Also, the total of the distance (measurement distance) Xd from foot sensor 22a1h to the foot, and distance Xf which is the X-axis coordinate portion from foot sensor 22a1h to a reference point of care robot 20, is the position of the foot of care receiver M1 with respect to the reference point of care robot 20.

As shown in figs. 1 and 2, first slide section 22a2 is formed in a substantially rectangular cuboid shape and is configured to be smaller than slide base section 22a1. First slide section 22a2 slides in a lengthwise direction (axis movement direction) with respect to slide base section 22a1, and is configured to be substantially housed inside slide base section 22a1 when contracted.

Specifically, first slide section 22a2 is provided with frame 22a2a (refer to fig. 3a). As shown in fig. 4b, frame 22a2a is formed in an H-shape in cross section and an H-shape in a side view, and is configured from front/rear plate members 22a2a1 and 22a2a2 and a connection plate member 22a2a3 whose front/rear ends are connected to a central portion in the vertical direction of front/rear plate members 22a2a1 and 22a2a2. Both the left and right ends of rear plate member 22a2a2 are slidably engaged with left/right guide groove 22a1e of frame 22a1b. As shown in fig. 3a, mainly slide motor 22a2b is provided on an upper section of rear plate member 22a2a2. Pulley 22a2c is rotatably provided on a lower section of rear plate member 22a2a2. Slide belt 22a2e is mounted around a pulley 22a2c and a pulley 22a2d of slide motor 22a2b.

As shown in fig. 4b, guide rail 22a2f is provided in both the left and right end sections of the front plate member 22a2a1 of frame 22a2a. Guide rail 22a2f slidably engages with left/right guide receiving section 22a3b on the inside of the left/right plate members of frame 22a3a of second slide section 22a3 which is described below.

As shown in figs. 1 and 2, second slide section 22a3 is formed in a substantially rectangular cuboid shape and is configured to be smaller than first slide section 22a2. Second slide section 22a3 slides in a lengthwise direction (axis movement direction) with respect to first slide section 22a2, and is configured to be substantially housed inside first slide section 22a2 when contracted.

Specifically, second slide section 22a3 is provided with frame 22a3a (refer to fig. 3a). As shown in fig. 4b, frame 22a3a is formed substantially in an H-shape in cross section and an H-shape in a side view, and is configured from left/right plate members 22a3a1 and 22a3a2 and a front/rear plate member 22a3a3 whose left/right ends are connected to the front section of left/right plate members 22a3a1 and 22a3a2. Left/right guide receiving section 22a3b that slidably engages with guide rail 22a2f of frame 22a2a is provided on the inside of frame 22a3a (the inner wall of left/right plate members 22a3a1 and 22a3a2). Fixed section 22a3c that is attached to and fixes slide belt 22a2e is provided on a lower section of right plate member 22a3a2 of frame 22a3a (refer to figs. 3b and 4c).

If slide motor 22a2b is driven, frame 22a2a of first slide section 22a2 extends in the axis movement direction with respect to frame 22a1b of slide base section 22a1 (the extended state shown in figs. 3a and 3b). At the same time, frame 22a3a of second slide section 22a3 extends with respect to frame 22a2a of first slide section 22a2 (the extended state shown in figs. 3a and 3b).

Conversely, if slide motor 22a2b is driven in the reverse direction, frame 22a2a of first slide section 22a2 contracts in the axis movement direction with respect to frame 22a1b of slide base section 22a1 (the contracted state shown in figs. 4a and 4c). At the same time, frame 22a3a of second slide section 22a3 contracts with respect to frame 22a2a of first slide section 22a2 (the contracted state shown in figs. 4a and 4c).

As shown in figs. 1 and 2, second arm 22b is formed in a substantially rectangular cuboid shape and is formed in an end section of second slide section 22a3 extending in a direction (forward direction) that is perpendicular to the lengthwise direction. Specifically, as shown in fig. 3a, second arm 22b is mainly provided with frame 22b1 configured from left/right plate members 22b1a and 22b1b. The rear end of left/right plate members 22b1a and 22b1b of frame 22b1 are respectively fixedly connected to an upper section of left/right plate members 22a3a1 and 22a3a2 of frame 22a3a.

Second rotation axis 22b2 is rotatably provided on an end section of left/right plate members 22b1a and 22b1b of frame 22b1. Second rotation motor 22b3 is provided on a center section of left/right plate members 22b1a and 22b1b. Second rotation drive belt 22b4 is mounted around a pulley of second rotation motor 22b3 and a pulley of second rotation axis 22b2.

Third arm 22c is formed in a substantially rectangular cuboid shape and the base section thereof is attached to an end section of second arm 22b so as to be rotatable around second rotation axis 22b2. Specifically, third arm 22c is provided with frame 22c2. The rear end section of frame 22c2 is fixed so as to be rotated as one with second rotation axis 22b2. The front end section of frame 22c2 is fixed to the rear end of holding section 23.

If second rotation motor 22b3 is driven, frame 22c2, that is, third arm 22c, rotates around second rotation axis 22b2 in an upward direction or a downward direction.

Holding section 23 is fixed to an end of third arm 22c. Holding section 23 assists the standing up and sitting down of care receiver M1 by supporting a body part (for example, the upper body, particularly, the chest) of care receiver M1. For example, holding section 23 is a member that supports both arms (both armpits) of care receiver M1 from below when working opposite care receiver M1 during standing up motion and sitting down motion, and is formed in a U-shape which is open in the forward direction in a plan view. Holding section 23 is formed, for example, from a relatively soft material on the assumption that holding section 23 contacts care receiver M1.

As shown in figs. 1 and 2, handle 24 is fixed to the upper surface of third arm 22c. Handle 24 is configured from a pair of left and right rod-shaped handgrips, and is provided such that the handgrips are to be gripped by the left and right hands of care receiver M1. Contact sensors 24a and 24b for detecting the gripping are provided in handle 24. Leftward turning switch 24c for turning the care robot 20 to the left and rightward turning switch 24d for turning the care robot 20 to the right are provided in handle 24. Furthermore, stop switch 24e for stopping the care robot 20 is provided in handle 24.

In addition, in a case where care receiver M1 walks in a state being supported by holding section 23, or in a case where care receiver M1 walks in a state gripping handle 24, load sensor 22c1 for detecting the force received from care receiver M1 is provided in third arm 22c. Load sensor 22c1 is a sensor for detecting as a voltage change the distortion amount of a distortion generating body which changes according to a load change, or a semiconductor-type pressure sensor in which gauge resistance is changed and converted into an electrical signal according to the distortion which arises when pressure is applied to a silicon chip.

Operation device 25 is provided with display unit 25a that displays images and operation section 25b that receives input operations from an operator (a caregiver or care receiver M1).

Display section 25a is configured from a liquid crystal display, and displays a selection screen for operation modes of care robot 20 and so on. A standing up motion assistance mode for assisting a standing up motion of care receiver M1, a sitting down motion assistance mode for assisting a sitting motion care receiver M1, and so on, are set as operation modes.

Operation section 25b is provided with a cursor key for moving a cursor up/down/left/right, a cancel key for canceling inputs, and a determination key for determining selected content; the configuration is such that operator instructions can be entered using the keys. Operation unit 25 may be configured from a touch panel that has the display function of display section 25a and the input function of operation section 25b such that the device is operated by pressing the display on the touch panel.

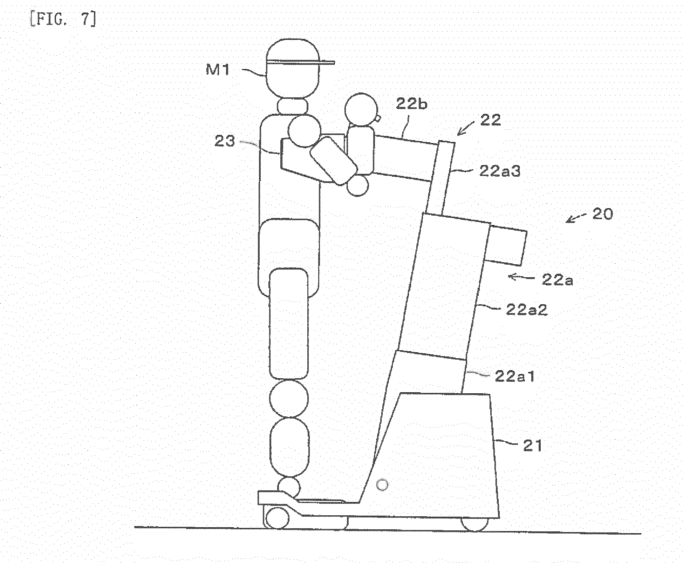

Storage device 26 (storage section) stores: standing up trajectory reference data that indicates a standing up trajectory along which a movement control position, for example shoulder position Ps, of care receiver M1 passes when a sitting care receiver M1 (refer to fig. 6) who is supported by holding section 23 stands up; and sitting down trajectory reference data that indicates a sitting down trajectory, which is different from the standing up trajectory, along which shoulder position Ps of care receiver M1 passes when a standing care receiver M1 (refer to fig. 7) who is supported by holding section 23 sits down.

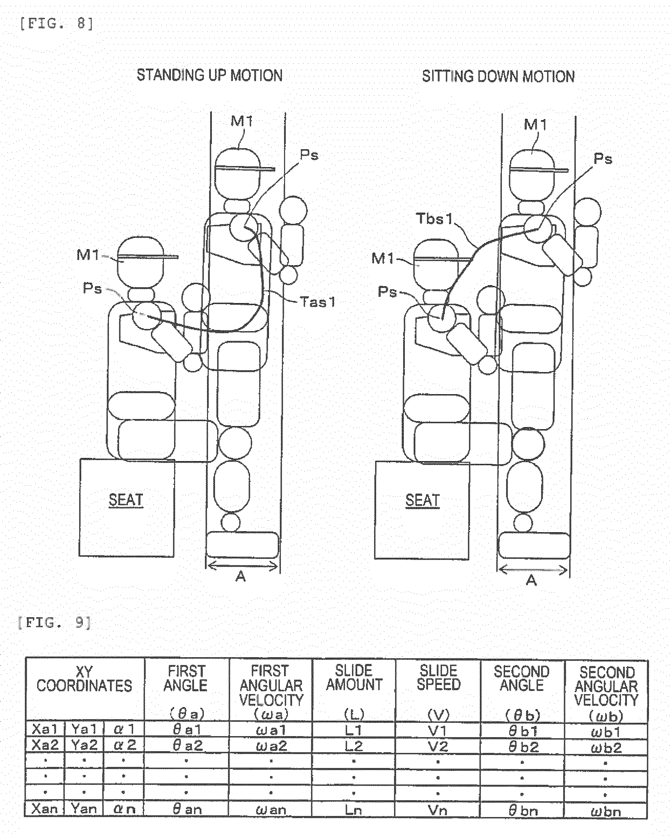

Standing up trajectory Tas1 and sitting down trajectory Tbs1 may be created by capturing images of actual standing up motion and creating the trajectories based on two-dimensional coordinates (for example, xy coordinates) of the shoulder position Ps. A standing-upright trajectory is shown in fig. 8 (left side). The standing up trajectory is based on the standing up trajectory reference data. Standing up trajectory reference data indicates a standing up trajectory through which movement control portion Ps of care receiver M1 passes in a case in which a knee (reference portion) of care receiver M1, which is a reference point of a stopping position of base 21, has a specific positional relationship with a foot position of care receiver M1 when care receiver M1 sitting on the seat stands up being supported by holding section 23. The specific positional relationship of the knee and foot position is when the angle of the knee is 90 degrees and the angle is positioned just about directly below the knee. Also, the specific positional relationship is decided in advance.

A sitting down trajectory is shown in fig. 8 (right side). The sitting down trajectory is based on the sitting down trajectory reference data. Note that, the standing up trajectory and the sitting down trajectory may be created by simulation.

Each trajectory reference data is created as two-dimensional coordinates. Standing up trajectory reference data is expressed, for example, as xy coordinates (Xa1, Ya1), ... , (Xan, Yan), where n is the quantity of coordinates. Sitting down trajectory reference data is expressed, for example, as xy coordinates (Xb1, Yb1), ..., (Xbn, Ybn), where n is the quantity of coordinates. The origin point may be the reference point of care robot 20, the center of gravity of care robot 20, coordinates of first rotation axis 22a1a, coordinates of a foot (ankle) when sitting, or any point on the seat surface of care receiver M1.

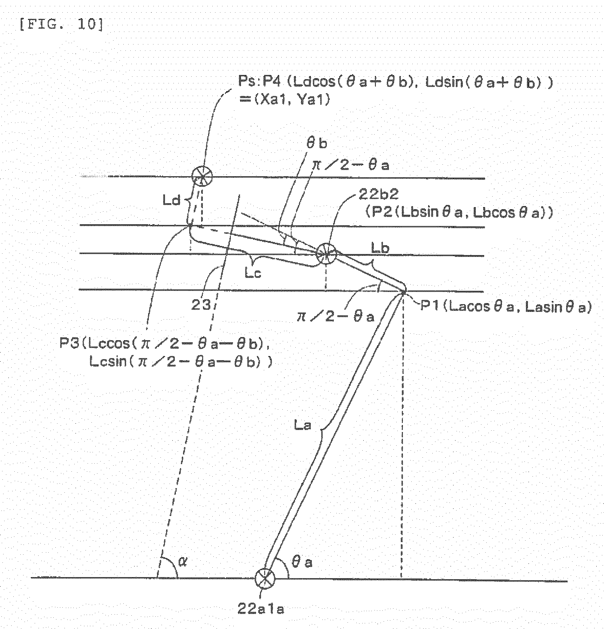

Trajectory reference data is preferably configured to include an angle α of holding section 23 for each coordinate in addition to the xy coordinates. The angle α of holding section 23 for each coordinate represents an angle of holding section 23 at each point in the standing up trajectory Tas1 and the sitting down trajectory Tbs1 (refer to fig. 10). The angle α is an angle which is formed by the upper body (inner wall surface of holding section 23 which contacts care receiver M1 so as to hold care receiver M1) of care receiver M1 and a horizontal plane. For example, as shown in fig. 10, when care receiver M1 is in a sitting position or in a standing position, the angle α is 90 degrees. The trajectory reference data is expressed, for example, as (Xa1, Ya1, α1), ..., (Xan, Yan, αn).

Note that, the trajectory reference data may be represented by robot coordinates instead of two-dimensional coordinates. In this case, standing up trajectory reference data is configured to include, for example, as shown in fig. 9, first angle (θa) which is the rotation angle of first rotation motor 22a1c, the arm length (L: slide amount: rotation angle corresponding to the arm length) of slide motor 22a2b, and a second angle (θb) which is the rotation angle of second rotation motor 22b3. Coordinates which include angle α of the XY coordinates (Xa1, Ya1, α1) are expressed as robot coordinates (θa1, L1, θb1).

A method of calculating robot coordinates (θa1, L1, θb1) from coordinates which include angle α of the XY coordinates (Xa1, Ya1, α1) is briefly described. Fig. 10 is a schematic side view showing lengths and angles of robot arm section 22. As shown in fig. 10, La (variable value) represents the length of the first arm 22a, Lb (fixed value) represents the length of the second arm 22b, and Lc (fixed value) and Ld (fixed value) respectively represent lengths from second rotation axis 22b2 to shoulder position Ps along an extension direction of third arm 22c and along a direction perpendicular to the extension direction. Also, first angle θa is an angle formed by first arm 22a and a horizontal line, an angle formed by first arm 22a and second arm 22b is 90 degrees, and second angle θb is an angle formed by second arm 22b and third arm 22c.

The XY coordinates of point P1, at which first arm 22a intersects second arm 22b, are (La x (cos θa), La x (sin θa)). The XY coordinates of point P2 indicative of second rotation axis 22b2 is obtained by adding (Lb x (sin θa), Lb x (cos θa)) to the XY coordinates of point P1. The XY coordinates of point P3 at which a perpendicular line extending from the shoulder point Ps intersects third arm 22c, is obtained by adding (Lc x (cos (π/2-θa-θb), Lc x (sin (π/2-θa-θb)) to the XY coordinates of point P2. The XY coordinates of the shoulder position Ps, that is, point P4 are obtained by adding (Ld x (cos (θa+θb), Ld x (sin (θa+θb)) to the XY coordinates of point P3. Note that, the angle α of holding section 23 for each coordinate is expressed as π - (π/2 + (π/2-θa-θb), that is, α = θa + θb. According to the above, robot coordinates (θa1, L1, θb1) are calculated from coordinates (Xa1, Ya1, α1) obtained by adding the angle α to the XY coordinates.

Note that, as shown in fig. 9, robot coordinates may be configured to include: a first angular velocity (ωa) which is the angular velocity of the first angle (θa), that is, the rotation angle of first rotation motor 22a1c; a slide velocity (V: rotation angular velocity corresponding to the slide velocity) of the slide motor 22a2b; and a second angular velocity (ωb) which is the angular velocity of the second angle (θb), that is, the rotation angle of second rotation motor 22b3.

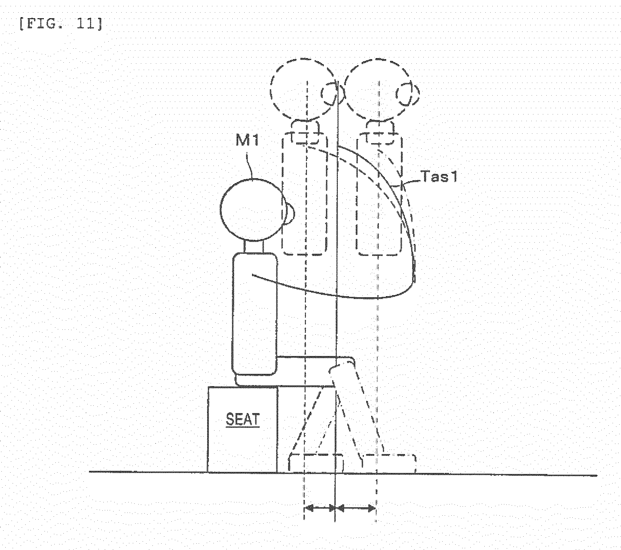

Storage device 26 further stores multiple items of standing up trajectory data in addition to the standing up trajectory reference data. These multiple items of standing up trajectory data are multiple items of data indicating trajectories different to a trajectory (reference standing up trajectory) corresponding to the standing up trajectory reference data, and are standing up trajectory data for different foot positions of care receiver M1. Fig. 11 shows each trajectory based on the multiple items of standing up trajectory data. The reference standing up trajectory based on the standing up trajectory reference data is shown by a solid line. The near-side-use standing up trajectory based on the near-side-use standing up trajectory data corresponding to a case in which a foot of care receiver M1 is positioned on the near side from the reference position (towards care receiver M1, the left side in fig. 11) is shown by a dashed line. The far-side-use standing up trajectory based on the far-side-use standing up trajectory data corresponding to a case in which a foot of care receiver M1 is positioned on the far side from the reference position (away from care receiver M1) is shown by a dashed-dotted line.

The reference standing up trajectory shown in fig. 11 (standing up trajectory Tas1 shown in fig. 8) is a standing up trajectory through which movement control portion Ps of care receiver M1 passes in a case in which a knee (reference portion) of care receiver M1, which is a reference point of a stopping position of base 21, has a specific positional relationship with a foot position of care receiver M1 (in the present embodiment, the foot is directly below the knee [reference position]) when care receiver M1 sitting on the seat stands up being supported by holding section 23.

At this time, until the point in time at which the posterior of care receiver M1 separates from the seat, the upper body of care receiver M1 is bent forward (slouched forward) with respect to the posterior of care receiver M1. From the point in time at which the posterior of care receiver M1 separates from the seat (latter portion), the forward tilting posture becomes a standing up posture as the upper body is raised, and finally the upper body (shoulder, which is movement control portion Ps), that is, the final point of the standing up motion, is positioned roughly directly above the foot which is in the reference position, such that the posture becomes a standing up straight posture. Note that, for the former portion, the standing up trajectory is the same regardless of the foot position. This is because the upper body bends forward with respect to the posterior.

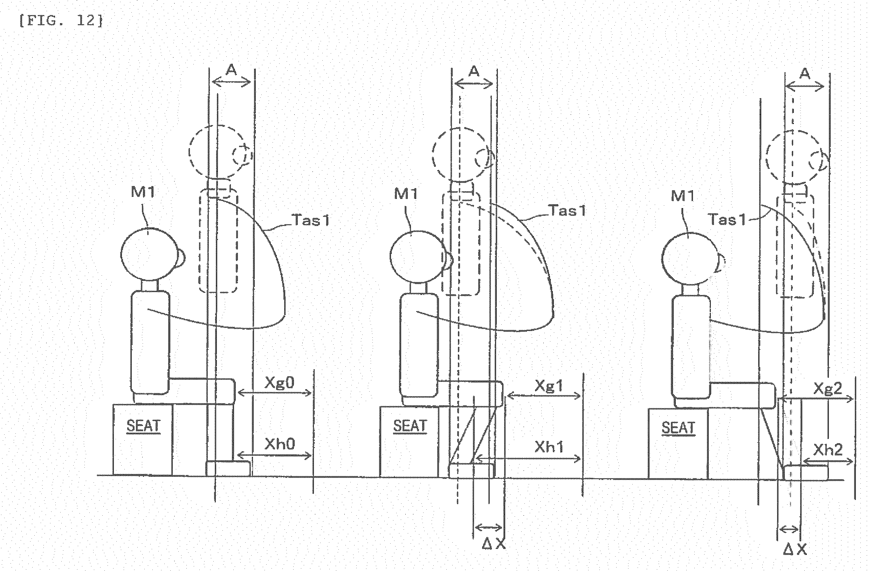

However, in a case in which the final point of standing up motion is roughly directly above the foot which is in the reference position even though the foot is on the near side from the reference position, the posture of care receiver M1 will be tilting forward, not standing up straight. To solve this problem, as shown in the center portion of fig. 12, it is desirable that, in a case in which the foot of care receiver M1 is on the near side from the reference position, the final point of the standing up motion is not roughly directly above the foot which is at the reference position, but is roughly directly above the foot positioned on the near side from the reference position. Further, it is desirable that the standing up trajectory from the point in time at which the posterior of care receiver M1 separates from the seat until standing up is complete is the near-side-use standing up trajectory. According to this, even in a case in which a foot is on the near side from the reference position, for care receiver M1, finally the upper body (shoulder, which is movement control portion Ps), that is, the final point of the standing up motion, is positioned roughly directly above the foot which is on the near side from the reference position, such that the posture becomes a standing up straight posture.

Further, in a case in which the final point of standing up motion is roughly directly above the foot which is in the reference position even though the foot is on the far side from the reference position, the posture of care receiver M1 will be tilting backward, not standing up straight. To solve this problem, as shown in the center portion of fig. 12, it is desirable that, in a case in which the foot of care receiver M1 is on the far side from the reference position, the final point of the standing up motion is not roughly directly above the foot which is at the reference position, but is roughly directly above the foot positioned on the far side from the reference position. Further, it is desirable that the standing up trajectory from the point in time at which the posterior of care receiver M1 separates from the seat until standing up is complete is the far-side-use standing up trajectory. According to this, even in a case in which a foot is on the far side from the reference position, for care receiver M1, finally the upper body (shoulder, which is movement control portion Ps), that is, the final point of the standing up motion, is positioned roughly directly above the foot which is on the far side from the reference position, such that the posture becomes a standing up straight posture.

Movement control portion Ps that corresponds to the final point of the standing up motion of the near-side-use standing up trajectory data is within a specified range above the foot position (near-side position) of care receiver M1 when care receiver M1 is sitting on the seat. Movement control portion Ps that corresponds to the final point of the standing up motion of the far-side-use standing up trajectory data is also within a specified range above the foot position (far-side position) of care receiver M1 when care receiver M1 is sitting on the seat (refer to fig. 12). Note that, the specified range is a range corresponding to, for example, range A of the sole of the foot, and is specified to be a range such that care receiver M1 does not suffer discomfort when standing up. If the posture of care receiver M1 is standing up straight, this specified range is directly above range A of the sole of the foot, but if the posture of care receiver M1 is tilted forward, this specified range is forward of range A of the sole of the foot.

For the above correction data, only one each was prepared of near-side-use standing up trajectory data and far-side-use standing up trajectory data, but multiple items of data may be prepared. In this case, the data can be created as follows. First, standing up trajectory reference data in a case in which the foot position is the reference position is measured (or simulated). Next, the foot position is changed by a specified interval (for example, 5 cm) from the reference position to the near side, and near-side-use standing up trajectory data is measured (or simulated). Measurement is performed in the same way for the far side. In a case in which measured foot positions differ, the two items of data are interpolated.

Further, storage device 26 stores a correction amount (first correction amount) according to the height of the seat such as a chair or a bed on which care receiver M1 sits. This first correction amount is a value for correcting each of the above data. Each of the above data is data when the height of the seat is a specified value (for example, 40 cm).

Also, storage device 26 stores a correction amount (second correction amount) according to the height of care receiver M1. The second correction amount is a value for correcting each of the above data. Each of the above data is data when the height of care receiver M1 is a specified value (for example, average height, specifically 170 cm).

The correction amounts above are stored as a map, but the correction amounts may be stored as calculation equations.

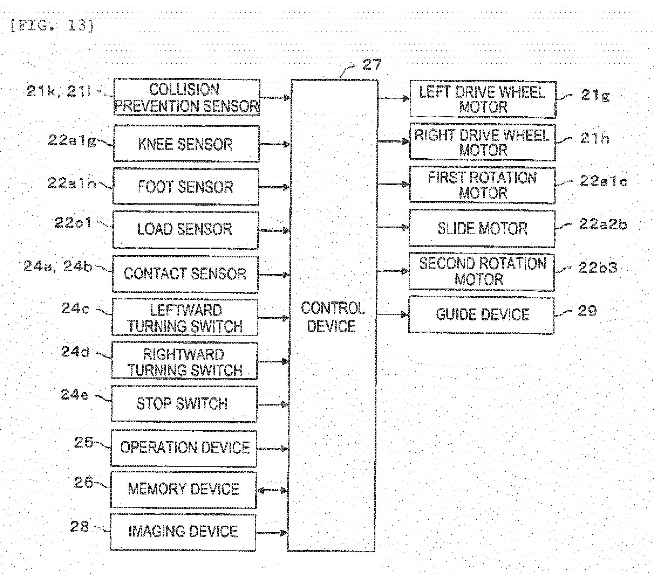

Control device 27 performs control related to traveling and posture changing of the care robot 20. As shown in fig. 13, the above collision prevention sensors 21k and 21l, knee sensor 22a1g, foot sensor 22a1h, load sensor 22c1, contact sensors 24a and 24b, leftward turning switch 24c, rightward turning switch 24d, stop switch 24e, left/right drive wheel motors 21g and 21h, first rotation motor 22a1c, slide motor 22a2b, second rotation motor 22b3, operation device 25, storage device 26, imaging device 28, and guide device 29 are connected to control device 27. Also, control device 27 has a microcomputer (not shown); the microcomputer is provided with an input/output interface, CPU, RAM, and ROM (all not shown) that are connected to one another via a bus.

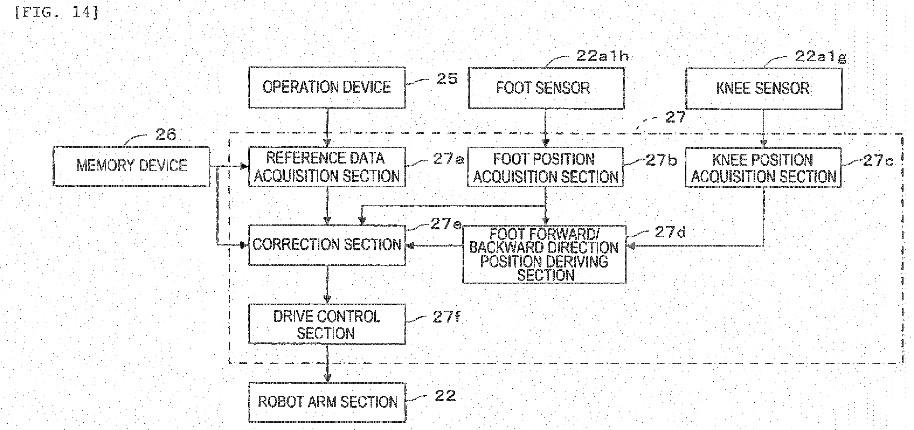

As shown in fig. 14, control device 27 is provided with reference data acquisition section 27a, foot position acquisition section 27b, knee position acquisition 27c, foot forward/backward direction position deriving section 27d, correction 27e, and drive control section 27f.

Reference data acquisition section 27a acquires an operation mode (any one of a standing up motion assistance mode, a sitting down motion assistance mode, a motion series assistance mode) selected using operation device 25, and acquires reference data according to the acquired mode from storage device 26. Standing up trajectory reference data is acquired when in standing up motion assistance mode, sitting down trajectory reference data is acquired when in sitting down motion assistance mode, and standing up trajectory reference data and sitting down trajectory reference data are acquired when in motion series assistance mode.

Foot position acquisition section 27b acquires the distance to a foot of care receiver M1 from foot sensor 22a1h. Foot position acquisition section 27b derives and acquires the position of a foot of care receiver M1 with respect to a reference point of care robot 20 (for example, this may be the above origin point of the reference data) from the acquired distance. Knee position acquisition section 27c acquires the distance to a knee of care receiver M1 from knee sensor 22a1g. Knee position acquisition section 27c derives and acquires the position of a knee of care receiver M1 with respect to a reference point of care robot 20 from the acquired distance.

Foot forward/backward direction position deriving section 27d derives the forward/backward direction position of a foot of care receiver M1 with respect to the knee position of care receiver M1 from: the distance to a knee (reference portion) of care receiver M1 detected by knee sensor 22a1g, and the distance to a foot of care receiver M1 detected by foot sensor 22a1h. Specifically, foot forward/backward direction position deriving section 27d derives a value of the position of the foot of care receiver M1 input from foot position acquisition section 27b subtracted from the position of the knee of care receiver M1 input from knee position acquisition section 27c as forward/backward direction position ΔX of the foot. Each position is expressed as a distance based on the X-axis coordinate portion, not the distance in a straight line from the reference point of care robot 20.

For example, in a case in which the foot is at the reference position (shown on the left in fig. 12), as given above, the knee position is Xg0, and the foot position is Xh0. At this time, if the absolute value of the difference between Xg0 and Xh0 is 0 or equal to or less than a specified value, the knee and foot are taken to be in the specified relative positions, and the standing up trajectory is not corrected. Also, in a case in which the foot is on the near side from the reference position (shown in the center in fig. 12), as given above, the knee position is Xg1, the foot position is Xh1 (>Xg1), and the foot forward/backward direction position ΔX is -(Xg1 - Xh1), which is a negative value.

Also, in a case in which the foot is on the far side from the reference position (shown on the right in fig. 12), as given above, the knee position is Xg2, the foot position is Xh1 (<Xg2), and the foot forward/backward direction position ΔX is +(Xg2 - Xh2), which is a positive value.

Correction section 27e corrects reference data acquired by reference data acquisition section 27a based on the foot position of care receiver M1 sitting on the seat acquired by foot position acquisition section 27b.

For example, correction section 27e performs correction such that the standing up motion final point of the standing up trajectory reference data is within a specified range above (directly above) the foot position of care receiver M1 when care receiver M1 is sitting on the seat.

Also, correction section 27e corrects standing up trajectory reference data based on the foot forward/backward direction position ΔX with respect to the knee position (reference portion position) of care receiver M1 at the point in time directly before the posterior of care receiver M1 separates from the seat. At this time, standing up trajectory reference data indicates a standing up trajectory through which movement control portion Ps of care receiver M1 passes in a case in which a knee (reference portion) of care receiver M1, which is a reference point of a stopping position of base 21 (refer to fig. 5), has a specific positional relationship with a foot position of care receiver M1 when care receiver M1 sitting on the seat stands up being supported by holding section 23.

For example, correction section 27e may offset the standing up motion final point by the foot forward/backward direction position ΔX, and may change the standing up trajectory of a mid-point by an approximate curve. Also, correction section 27e may interpolate and approximate standing up trajectory reference data, near-side-use standing up trajectory data, and far-side-use standing up trajectory data with the foot forward/backward direction position ΔX. Also, the item that suits the foot forward/backward direction position ΔX may be selected from multiple near-side-use standing up trajectory data and far-side-use standing up trajectory data.

Also, when care receiver M1 sitting on the seat stands up being supported by holding section 23, correction section 27e corrects the standing up trajectory reference data based on the foot forward/backward direction position ΔX with respect to the knee position (reference portion position) of the care receiver at the point in time directly before the posterior of care receiver M1 separates from the seat during a latter portion which is from the point in time that the posterior of the care receiver separates from the seat.

Drive control section 27f drives the drive section configured to include first and second rotation motors 22a1c and 22b3, and slide motor 22a2b, so as to drive the standing up motion of robot arm section 22 based on the standing up trajectory reference data or the corrected standing up trajectory reference data. Also, drive control section 27f drives the drive section, so as to drive the sitting down motion of robot arm section 22 based on the sitting down trajectory reference data or the corrected sitting down trajectory reference data. Specifically, drive control section 27f acquires reference data corrected by correction section 27e (including reference data that has not been corrected) from correction section 27e. Then, drive control section 27f drives the drive section in accordance with the acquired reference data.

Also, when each of the data items are stored while also including the angle α of holding section 23 at each point in the standing up trajectory and the sitting down trajectory, control device 27 (drive control section 27f) drives the drive section such that the angle of the holding section at each point is controlled to become the angle α stored in the standing up trajectory reference data and the sitting down trajectory reference data.

Also, control device 27 (drive control section 27f) adjusts the standing up trajectory and the sitting down trajectory of robot arm section 22 in accordance with the body height of care receiver M1 or the height of the seat. Correction section 27e corrects the reference data acquired by reference data acquisition section 27 based on the body height and height of the seat. Specifically, correction section 27e acquires the second correction amount corresponding to the acquired body height, or the first correction amount corresponding to the height of the seat from storage device 26. Correction section 27e corrects the reference data acquired by reference data acquisition section 27a based on each acquired correction amount.

Imaging device 28 is provided respectively on the front surface of slide base section 22a1 and the rear surface of first slide section 22a2. Imaging device 28 provided on the front surface of slide base section 22a1 images a target in front of care robot 20. Imaging device 28 provided on the rear surface of first slide section 22a2 images a target behind or above care robot 20.

Guide device 29 provides guidance to people, including care receiver M1 and a caregiver, in the vicinity regarding the state of care robot 20 using sound or a display. Guide device 29 may be a speaker for outputting sound, or a display device such as an LCD or an LED for displaying characters or graphics and the like.

Next, the operation of care robot 20 configured as given above will be described. First, a case will be described in which care robot 20 comes close to a sitting care receiver M1. At this time, care robot 20 is, for example, approaching care receiver M1 who is sat on a bed. Care robot 20 advances with the front surface of care robot 20 facing in the traveling direction. Care robot 20 reads a guiding mark provided in the vicinity of care receiver M1 using imaging device 28 in the front surface of care robot 20, and approaches care receiver M1 based on the information. Care robot 20 uses a detection result (distance between care robot 20 and a knee of care receiver M1) of knee sensor 22a1g, and moves to a specified position where the distance from sitting care receiver M1 becomes specified distance Xc1. The specified position is the optimum position for standing up care receiver M1 (standing up optimum position).

Then, care robot 20 gives the guidance "Grip the handle" to care receiver M1. If care receiver M1 grips both handles, the fact that handle 24 has been gripped is detected by contact sensors 24a and 24b, thus care robot 20 performs standing up motion for allowing the care receiver M1 to stand up.

If a standing up motion starts, care robot 20 holds the upper body of sitting care receiver M1 using holding section 23 (refer to fig. 6). Then, while holding the upper body of care receiver M1, care robot 20 stands the care receiver M1 up (refer to fig. 10). More specifically, as shown in fig. 8, the standing up motion is performed along the reference standing up trajectory. During standing up motion, as given above, standing up trajectory reference data is corrected based on the foot position of care receiver M1 sitting on the seat, and standing up motion is performed along the standing up trajectory based on the corrected standing up trajectory reference data.

Care robot 20 assists care receiver M1 in a standing up state. Care receiver M1 moves by walking in a state supported by holding section 23 supporting the arms of care receiver M1 from below. Care robot 20 advances with the rear surface of care robot 20 facing in the traveling direction.

And, if a sitting down operation for sitting care receiver M1 down starts, care robot 20 brings care receiver M1 in a standing up state (refer to fig. 7) into a sitting down state while the upper body of care receiver M1 is held by holding section 23 (refer to fig. 6). More specifically, as shown in fig. 8, the sitting down motion is performed along the sitting down trajectory.

Then, when the sitting down motion ends, care robot 20 gives the guidance "Let go of the handle" to care receiver M1. If care receiver M1 lets go of handle 24, contact sensors 24a and 24b detect the fact that the hands have let go of handle 24, thus, care robot 20 moves away from care receiver M1.

The present embodiment of care robot 20 comprises: base 21; robot arm section 22 that is provided on base 21 and includes multiple arms 22a to 22c that are relatively movable to each other by using a drive section (first and second rotation motors 22a1c and 22b3, and slide motor 22a2b); holding section 23 that is provided on an end (a portion) of robot arm section 22 and that assists care receiver M1 to stand up or sit down by supporting a body part of care receiver M1; storage section 26 that stores standing up trajectory reference data which indicates the standing up trajectory along which movement control portion Ps of care receiver M1 passes when care receiver M1 sitting on a seat stands up being supported by holding section 23; correction section 27e that corrects the standing up trajectory reference data based on a foot position of care receiver M1 when sitting on the seat; and drive control section 27 that drives the drive section (first and second rotation motors 22a1c and 22b3, and slide motor 22a2b) so as to drive robot arm section 22 based on the standing up trajectory reference data corrected by correction section 27e.

According to this, the standing up trajectory reference data is corrected based on the foot position of care receiver M1 sitting on the seat, and robot arm section 22 and holding section 23 are driven based on the corrected standing up trajectory reference data. Thus, in a case in which the position on the floor of a foot of sitting care receiver M1 is further forward (far side) than the position directly below the knee position of care receiver M1, and in a case in which the position on the floor of a foot of sitting care receiver M1 is further backward (near side) than the position directly above the knee position of care receiver M1, the standing state of care receiver M1 who is transitioned from a sitting position to a standing position is a correct (natural) standing state, not a state tilted backward or tilted forward. Thus, even when a foot position of the sitting care receiver M1 varies, care robot 20 stands up care receiver M1 in a posture without discomfort.

Also, with care robot 20 of the above embodiment, correction section 27e performs correction such that the standing up motion final point of the standing up trajectory reference data is within specified range A above the foot position of care receiver M1 when care receiver M1 is sitting on the seat

According to this, in a case in which the position on the floor of a foot of sitting care receiver M1 is further forward (far side), or further backward (near side), than the position directly below the knee position of care receiver M1, because the standing up motion final point is within specified range A above the foot position of care receiver M1, the standing state of the care receiver who is transitioned from a sitting position to a standing position is a correct (natural) standing state, not a state tilted backward or tilted forward.

Also, with care robot 20 of the above embodiment, standing up trajectory reference data indicates a standing up trajectory through which movement control portion Ps of care receiver M1 passes in a case in which a knee (reference portion) of care receiver M1, which is a reference point of a stopping position of base 21, has a specific positional relationship with a foot position of care receiver M1 when care receiver M1 sitting on the seat stands up being supported by holding section 23, and correction section 27e corrects the standing up trajectory reference data based on foot forward/backward direction position ΔX with respect to the position of the reference portion of the care receiver at the point in time directly before the posterior of care receiver M1 separates from the seat.

According to this, standing up trajectory reference data is corrected based on based on the foot forward/backward direction position ΔX with respect to the knee position (reference portion position) of care receiver M1 at the point in time directly before the posterior of care receiver M1 separates from the seat. And, robot arm section 22 and holding section 23 are driven based on the corrected standing up trajectory reference data. According to this, in a case in which the position on the floor of a foot of sitting care receiver M1 is further forward (far side), or further backward (near side), than the position directly below the knee position of care receiver M1, not only is care receiver M1 stood up in a posture without discomfort after being transitioned from a sitting position to a standing position, care receiver M1 is stood up without discomfort while being transitioned.

Also, with care robot 20 of the above embodiment, when care receiver M1 sitting on the seat stands up being support by holding section 23, correction section 27e corrects the standing up trajectory reference data based on the foot forward/backward direction position ΔX with respect to the knee position (reference portion position) of the care receiver at the point in time directly before the posterior of care receiver M1 separates from the seat during a latter portion which is from the point in time that the posterior of the care receiver separates from the seat.

According to this, care receiver M1 is stood up without discomfort during the transition from a sitting position to a standing up position, in particular in the latter portion from the point in time at which the posterior of care receiver M1 separates from the seat.

Also, with care robot 20 of the above embodiment, further provided are: knee sensor 22alg (first distance detecting sensor) that detects a distance to a knee (reference portion) of care receiver M1; foot sensor 22a1g (second distance detecting sensor) that detects a distance to an ankle of care receiver M1; and foot forward/backward direction position deriving section 27d that derives the foot forward/backward direction position ΔX with respect to the knee position (reference portion position) of care receiver M1 from: the distance to the knee of care receiver M1 detected by knee sensor 22a1g (first distance detecting sensor); and the distance to the ankle of care receiver M1 detected by foot sensor 22alh (second distance detecting sensor).

According to this, foot forward/backward direction position ΔX with respect to the knee position (reference portion position) of care receiver M1 is derived accurately, and standing up trajectory reference data is corrected accurately.

Also, with care robot 20 of the above embodiment, the reference portion of care receiver M1 is a knee of care receiver sitting on the seat, and the specified positional relationship is a relationship in which a foot of the care receiver is positioned vertically directly below the knee of the care receiver.

According to this, it is possible to derive, more accurately and with low cost, the foot forward/backward direction position with respect to the position of the reference portion of care receiver M1 by using an existing knee detection sensor. Reference Signs List

20: care robot; 21: base; 21g, 21h: left/right drive wheel motor (drive source); 22: robot arm section; 22a: first arm; 22a1c: first rotation motor (drive section); 22a2b: slide motor (drive section); 22b: second arm; 22b3: second rotation motor (drive section); 22c: third arm; 23: holding section; 24: handle; 25: operation device; 26: storage device (storage section); 27: control device; 27a: reference data acquisition section; 27b: foot position acquisition section; 27c: knee position acquisition section; 27d: foot forward/backward direction position deriving section; 27e: correction section; 27f: drive control section; 28: imaging device; 29: guide device; M1: care receiver

## Claims

1. A care robot comprising:
a base;
a robot arm section that is provided on the base and includes multiple arms that are relatively movable to each other by using a drive section;
a holding section that is provided on a portion of the robot arm section and that is configured to assist a care receiver to stand up or sit down by supporting a body part of the care receiver;
a storage section that is configured to store; standing up trajectory reference data which indicates the standing up trajectory along which a movement control portion of the care receiver passes when the care receiver sitting on a seat stands up being supported by the holding section; **characterised by** a correction section that is configured to correct the standing up trajectory reference data based on a foot position of the care receiver when sitting on the seat;
and a drive control section that is configured to drive the drive section so as to drive the robot arm section based on the standing up trajectory reference data corrected by the correction section.

2. The care robot according to claim 1,
wherein the correction section is configured to correct such that the movement control portion corresponding to the standing up motion final point of the standing up trajectory reference data is in a specified range above the foot position of the care receiver when the care receiver is sitting on the seat.

3. The care robot according to claim 1,
wherein the standing up trajectory reference data indicates a standing up trajectory through which the movement control portion of the care receiver passes in a case in which a reference portion of the care receiver, which is a reference point of a stopping position of the base, has a specific positional relationship with a foot position of the care receiver when the care receiver sitting on the seat stands up being supported by the holding section, and
wherein the correction section corrects the standing up trajectory reference data based on the forward/backward direction position of the foot of the care receiver with respect to the position of the reference portion of the care receiver at the point in time directly before the posterior of the care receiver separates from the seat.

4. The care robot according to claim 3,
wherein, when the care receiver sitting on the seat stands up being supported by the holding section, the correction section corrects the standing up trajectory reference data during a latter portion which is from the point in time that the posterior of the care receiver separates from the seat, based on the forward/backward direction position of the foot of the care receiver with respect to the position of the reference portion of the care receiver at the point in time directly before the posterior of the care receiver separates from the seat.

5. The care robot according to claim 3 or claim 4, further provided with
a first distance detecting sensor that detects a distance to a reference portion of the care receiver,
a second distance detecting sensor that detects a distance to a foot of the care receiver; and
a foot forward/backward direction position deriving section that is configured to derive; the forward/backward position of the foot with respect to the position of the reference portion of the care receiver from the distance to the reference portion of the care receiver detected by the first distance detecting sensor and the distance to the foot of the care receiver detected by the second distance detecting section.

6. The care robot according to claim 5,
wherein the reference portion of the care receiver is a knee of the care receiver sitting on the seat, and
wherein the specific positional relationship is a relationship in which the foot of the care receiver is positioned vertically directly below the knee of the care receiver.

## Patentansprüche

1. Ein Pflegeroboter beinhaltet:
eine Basis;
einen Roboterarmabschnitt, der an der Basis angebracht ist und mehrere Arme aufweist, die relativ zueinander beweglich sind, indem ein Antriebsabschnitt verwendet wird;
einen Halteabschnitt, der an einem Abschnitt des Roboterarmabschnitts angebracht ist und einen Pflegeempfänger beim Aufstehen oder Hinsetzen unterstützt, indem er einen Körperteil des Pflegeempfängers stützt;
einen Speicherabschnitt, der Aufstehtrajektorien-Referenzdaten speichert, welche die Aufstehtrajektorie angeben, entlang welcher ein Bewegungssteuerabschnitt des Pflegeempfängers führt, wenn der auf einem Sitz sitzende Pflegeempfänger durch den Halteabschnitt gestützt aufsteht;
einen Korrekturabschnitt, welcher die Aufstehtrajektorien-Referenzdaten basierend auf einer Fußposition des sitzenden Pflegeempfängers korrigiert;
und einen Antriebssteuerabschnitt, der den Antriebsabschnitt antreibt, um den Roboterarmabschnitt auf der Grundlage der durch den Korrekturabschnitt korrigierten Aufstehtrajektorien-Referenzdaten anzutreiben.

2. Der Pflegeroboter gemäß Anspruch 1,
wobei der Korrekturabschnitt korrigiert, dass der Bewegungssteuerungsabschnitt, entsprechend dem Aufstehtrajektorien-Endpunkt der Referenzdaten der Aufstehtrajektorie in einem spezifizierten Bereich über der Fußposition des Pflegeempfängers liegt, wenn der Pflegeempfänger auf dem Sitz sitzt.

3. Der Pflegeroboter gemäß Anspruch 1,
wobei die Aufstehtrajektorien-Referenzdaten eine Aufstehtrajektorie angeben durch die der Bewegungssteuerabschnitt des Pflegeempfängers hindurchführt in einem Fall, in dem ein Referenzabschnitt des Pflegeempfängers, der ein Bezugspunkt einer Halteposition der Basis ist, ein bestimmtes Positionsverhältnis zu einer Fußposition des Pflegeempfängers aufweist, wenn der auf dem Sitz sitzende Pflegeempfänger durch den Halteabschnitt gestützt aufsteht, und
wobei der Korrekturabschnitt die Aufstehtrajektorien-Referenzdaten basierend auf der Vorwärts- / Rückwärtsrichtungsposition des Fußes des Pflegeempfängers in Bezug auf die Position des Referenzabschnitts des Pflegeempfängers zu dem Zeitpunkt unmittelbar bevor sich das Hinterteil des Pflegeempfänger vom Sitz trennt, korrigiert.

4. Der Pflegeroboter gemäß Anspruch 3,
wobei der Korrekturabschnitt, wenn der auf dem Sitz sitzende Pflegeempfänger durch den Halteabschnitt gestützt wird, die Aufstehtrajektorien-Referenzdaten während eines späteren Abschnitt korrigiert, ab dem Zeitpunkt, zu dem sich das Hinterteil des Pflegeempfängers von dem Sitz trennt, basierend auf der Vorwärts-/ Rückwärtsrichtungsposition des Fußes des Pflegeempfängers in Bezug auf die Position des Referenzabschnitts des Pflegeempfängers zu dem Zeitpunkt unmittelbar bevor sich das Hinterteil des Pflegeempfängers von dem Sitz trennt.

5. Der Pflegeroboter gemäß Anspruch 3 oder Anspruch 4, ferner versehen mit
einem ersten Abstandserfassungssensor, der eine Entfernung zu einem Referenzabschnitt des Pflegeempfängers erfasst,
einem zweiten Abstandserfassungssensor, der eine Entfernung zu einem Fuß des Pflegeempfängers erfasst; und
einem Fußvorwärts- / Rückwärtsrichtungs-Positionsableitungsabschnitt, der die Vorwärts / Rückwärts-Position des Fußes in Bezug auf die Position des Referenzabschnitts des Pflegeempfängers ableitet, aus dem Abstand zu dem Referenzabschnitt des Pflegeempfängers, der durch den ersten Abstandserfassungssensor erfasst wird, und dem Abstand zu dem Fuß des Pflegeempfängers, der durch den zweiten Abstandserfassungsabschnitt erfasst wird.

6. Der Pflegeroboter gemäß Anspruch 5,
wobei der Referenzabschnitt des Pflegeempfängers ein Knie des auf dem Sitz sitzenden Pflegeempfängers ist, und
wobei das spezifische Positionsverhältnis ein Verhältnis ist, in welchem der Fuß des Pflegeempfängers vertikal direkt unter dem Knie des Pflegeempfängers angeordnet ist.

## Revendications

1. Robot de soins comprenant :
une base,
une section de bras de robot qui est disposée sur la base et qui inclut de multiple bras qui sont mobiles relativement les uns par rapport aux autres en utilisant une section d'entraînement,
une section de maintien qui est disposée sur une partie de la section de bras de robot et qui est configurée pour aider un receveur de soins à se lever ou à s'asseoir en supportant le corps du receveur de soins,
une section de stockage qui est configurée pour stocker des données de référence de trajectoire de levée qui indiquent la trajectoire de la levée le long de laquelle passe un organe de commande de mouvement du receveur de soins lorsque le receveur de soins, s'asseyant sur un siège, se lève en étant supporté par la section de maintien, **caractérisé par**
une section de correction qui est configurée pour corriger les données de référence de trajectoire de levée sur la base de la position du pied du receveur de soins lorsqu'il s'assied sur le siège,
et une section de commande d'entraînement qui est configurée pour entraîner la section d'entraînement de sorte à emmener la section de bras de robot sur la base des données de référence de trajectoire de levée corrigées par la section de correction.

2. Robot de soins selon la revendication 1,
dans lequel la section de correction est configurée pour effectuer une correction telle que la partie de commande de mouvement correspondant au point final du mouvement de levée des données de référence de trajectoire de levée se trouve dans une plage spécifiée au-dessus de la position du pied du receveur de soins lorsque le receveur de soins s'assied sur le siège.

3. Robot de soins selon la revendication 1,
dans lequel les données de référence de trajectoire de levée indiquent une trajectoire de levée par laquelle passe l'organe de commande de mouvement du receveur de soins dans un cas dans lequel une partie de référence du receveur de soins, qui représente le point de référence d'une position d'arrêt de la base, présente une relation spécifique de position avec la position du pied du receveur de soins lorsque le receveur de soins, s'asseyant sur le siège, se lève en étant supporté par la section de maintien, et
dans lequel la section de correction retouche les données de référence de trajectoire de levée sur la base de la position de la direction vers l'avant ou l'arrière du pied du receveur de soins par rapport à la position du point de référence du receveur de soins à un instant situé immédiatement avant que le postérieur du receveur de soins se sépare du siège.

4. Robot de soins selon la revendication 3,
dans lequel, lorsque le receveur de soins, s'asseyant sur le siège, se lève en étant supporté par la section de maintien, la section de correction retouche les données de référence de trajectoire de levée durant une dernière partie qui se situe à partir de l'instant où le postérieur du receveur de soins se sépare du siège, sur la base de la position de direction vers l'avant ou l'arrière du pied du receveur de soins par rapport à la position de la partie de référence du receveur de soins à l'instant immédiatement avant que le postérieur du receveur de soins se sépare du siège.

5. Robot de soins selon la revendication 3 ou la revendication 4, doté en outre
d'un premier capteur de détection de distance qui détecte la distance jusqu'à une partie de référence du receveur de soins,
d'un second capteur de détection de distance qui détecte la distance jusqu'au pied du receveur de soins, et
d'une section de déduction de position de direction vers l'avant ou l'arrière de pied qui est configurée pour déduire la position vers l'avant ou vers l'arrière du pied par rapport à la position de la partie de référence du receveur de soins à partir de la distance de la partie de référence du receveur de soins détectée par le premier capteur de détection de distance, ainsi que de la distance jusqu'au pied du receveur de soins détectée par la seconde section de détection de distance.

6. Robot de soins selon la revendication 5,
dans lequel la partie de référence du receveur de soins est un genou du receveur de soins s'asseyant sur le siège, et
dans lequel la relation spécifique de position est une relation dans laquelle le pied du receveur de soins est positionné à la verticale directement en dessous du genou du receveur de soins.
